# EUROPÄISCHE PATENTANMELDUNG

(11) **EP 3 663 606 A1**
(43) Veröffentlichungstag der Anmeldung: **10.06.2020**
(21) Anmeldenummer: 19208773.2
(22) Anmeldetag: 13.11.2019
(51) Int. Cl.: F16F 13/10, F16F 13/26

(54) **HYDRAULISCH DÄMPFENDES, SCHALTBARES AGGREGATLAGER MIT IN DER KANALSCHEIBE INTEGRIERTER SCHALTVORRICHTUNG**

(30) Priorität: 22.11.2018 DE 102018129504
(71) Anmelder: BOGE Elastmetall GmbH, 49401 Damme (DE)
(72) Erfinder: SCHÄFER, Christof, 53489 Sinzig (DE)
(74) Vertreter: Bossmeyer, Jörg Peter

(57) **Zusammenfassung**

Die Erfindung beschreibt eine Baugruppe für ein hydraulisch dämpfendes, schaltbares Aggregatlager, wobei die Baugruppe eine Schaltvorrichtung zum Öffnen und Verschließen einer Öffnung in einer Membrankammer und eine Kanalscheibe umfasst und die Schaltvorrichtung an der Kanalscheibe befestigt ist.

## Beschreibung

Die Erfindung betrifft eine Baugruppe für ein hydraulisch dämpfendes, schaltbares Aggregatlager mit den im Oberbegriff des Anspruchs 1 aufgeführten Merkmalen.

Hydraulisch dämpfende Motorlager werden für die Schwingungen absorbierende Lagerung von Antriebsaggregaten in Kraftfahrzeugen zum Einsatz gebracht. Ein derartiges Motorlager muss beispielsweise durch Verbesserung des Fahrkomforts des Kraftfahrzeuges Schwingungen unterschiedlicher Frequenzen wirksam dämpfen bzw. isolieren, um damit zu vermeiden, dass diese sich vom Antriebsaggregat auf das Kraftfahrzeug übertragen und somit wahrgenommen werden können. Aufgrund der großen Bandbreite der zu dämpfenden Schwingungen sind die im Einsatz befindlichen Motorlager sehr komplex aufgebaut. Gemein ist jedoch sämtlichen hydraulisch dämpfenden Motorlagern, dass sie zur Absorption der auftretenden Schwingungen neben einem Elastomerkörper mit einer hydraulischen Dämpfungsflüssigkeit befüllte und strömungsleitend miteinander verbundene Kammern aufweisen. Die Art und Weise der Strömungen leitenden Verbindung zwischen den Kammern bestimmt dabei maßgeblich die Art und Weise sowie den Betrag der Dämpfung des Motorlagers.

Je nach Betrieb des Motors können sich die Frequenzen der zu dämpfenden Schwingungen unterscheiden. So können die Schwingungsfrequenzen im Leerlauf des Motors von denen des Motors im Fahrbetrieb verschieden sein. Des Weiteren können einzelne Bauteile des Lagers zu resonanter Schwingung angeregt werden. Abhängig von den Schwingungseigenschaften der Lagerbauteile ergeben sich Schwingungseigenschaften des Aggregatlagers. Die Schwingungseigenschaften der Lagerbauteile können angepasst werden, um die Übertragung der Schwingungen zwischen Motor und Karosserie optimal zu dämpfen. Die Schwingungsdämpfung umfasst insbesondere die Absorption der Schwingungen und die Isolation der Schwingungen zwischen verschiedenen Lagerbauteilen.

In der Entwicklung von Aggregatlagern spielt neben der Erhöhung des Komforts das Gewicht des Aggregatlagers eine entscheidende Rolle. Beispielsweise hat der mit einem geringeren Gewicht einhergehende geringere Kraftstoffverbrauch des Kraftfahrzeugs positive Auswirkungen auf die Wirtschaftlichkeit und die Umweltverträglichkeit des Kraftfahrzeugs.

Aus dem Stand der Technik bekannte schaltbare, hydraulisch dämpfende Motorenlager umfassen eine Schaltvorrichtung, mit deren Hilfe auf die Dämpfungseigenschaften des Lagers Einfluss genommen werden kann. So können beispielsweise Schwingungen im Fahrbetrieb des Kraftfahrzeugs über die Verdrängung einer Flüssigkeit aus einer Arbeitskammer in eine Ausgleichskammer gedämpft werden. Schwingungen im Leerlauf können über die Bewegung einer Membran gedämpft bzw. isoliert werden, wobei kein oder nur ein geringer Flüssigkeitsaustausch zwischen den Kammern stattfindet.

Bekannte Motorenlager umfassen ein Kanalsystem, an welches ein Lagerdeckel anbringbar ist, wobei der Lagerdeckel eine Schaltvorrichtung umfasst oder die Schaltvorrichtung an den Lagerdeckel anbringbar ist. Wie unten näher erläutert, öffnet und schließt die Schaltvorrichtung eine Öffnung zu einem Luftpolster und begünstigt damit jeweils eine der oben beschriebenen Dämpfungsarten.

Der vorliegenden Erfindung hat zur Aufgabe die Dämpfungseigenschaften des eingangs beschriebenen Aggregatlagers zu verbessern und dessen Gewicht zu verringern.

Diese Aufgabe wird durch die in den unabhängigen Ansprüchen angegebene Erfindung gelöst. Vorteilhafte Ausgestaltungen sind den Unteransprüchen und der nachfolgenden Beschreibung zu entnehmen.

Erfindungsgemäß ist eine Baugruppe geschaffen für ein hydraulisch dämpfendes, schaltbares Aggregatlager, wobei die Baugruppe eine Schaltvorrichtung zum Öffnen und Verschließen einer Öffnung in einer Membrankammer und eine Kanalscheibe umfasst, wobei die Schaltvorrichtung an der Kanalscheibe, insbesondere in einer Aufnahmeöffnung der Kanalscheibe mittels Formschluss und/oder Kraftschluss und/oder Stoffschluss befestigt ist.

Die Erfindung beruht auf der Erkenntnis, dass durch die Befestigung der Schaltvorrichtung an der Kanalscheibe, beispielsweise mittels Vergussmasse, einer Nut-Feder-Verbindung oder Spundung, der herkömmliche Lagerdeckel kein notwendiger Bestandteil des Aggregatlagers mehr ist. Mit anderen Worten: Die Schaltvorrichtung ist in der Kanalscheibe integriert. Dies hat den Vorteil, dass auf den Lagerdeckel als Bauteil des Aggregatlagers verzichtet werden kann. Hierdurch ist das Gewicht des Aggregatlagers verringert. Außerdem ist die Baugröße des Aggregatlagers reduziert. Durch die direkte Befestigung der Schaltvorrichtung an der Kanalscheibe ist ferner das Öffnen und Schließen der Membrankammeröffnung optimiert, da Toleranzen der Verbindungsbauteileigenschaften, wie beispielsweise die Form des herkömmlichen Lagerdeckels, bei der Konstruktion der Baugruppe nicht berücksichtigt werden müssen.

In einer Ausgestaltung umfasst die Baugruppe eine Dichtung, insbesondere eine elastische Dichtung zum Abdichten der Schaltvorrichtung gegenüber der Membrankammer. Dies hat den Vorteil, dass die Schaltvorrichtung geschützt ist, insbesondere vor Verschmutzung. Die Membrankammer kann z.B. mit der Umgebung des Aggregatlagers verbunden sein, sodass Luft aus der Umgebung des Aggregatlagers in die Membrankammer gelangen kann. In diesem Fall ist die Schaltvorrichtung durch die Dichtung auch bei geöffneter Öffnung der Membrankammer vor Verunreinigungen in der Luft geschützt.

Des Weiteren kann auf andere Mittel zur Abdichtung oder zum Schutz der Schaltvorrichtung verzichtet werden. Beispielsweise kann auf Vergussmasse verzichtet werden. Hierdurch ist das Gewicht des Aggregatlagers weiter verringert.

In einer Ausgestaltung umfasst die Baugruppe eine Ausgleichskammer zur Aufnahme eines Dämpfmittels, insbesondere einer Dämpfflüssigkeit, wobei die Dichtung die Ausgleichskammer begrenzt. Damit kann die Dichtung beispielsweise die Außenwand der Ausgleichskammer darstellen. Dies hat den Vorteil, dass für die Außenwand der Ausgleichskammer und die Dichtung nur ein Bauteil benötigt wird. Hierdurch wird der Zusammenbau der Baugruppe erleichtert und die Anzahl der Bauteile reduziert. Vorzugsweise bildet die Dämpfflüssigkeit das Dämpfmittel.

In einer Ausgestaltung dichtet die Dichtung die Ausgleichskammer gegenüber der Membrankammer und/oder der Schaltvorrichtung ab. Ferner dichtet die Dichtung die Ausgleichskammer gegenüber der Atmosphäre, d.h. der Umgebung des Aggregatlagers ab. Dies hat den Vorteil, dass zur räumlichen Trennung der Ausgleichskammer von der Membrankammer und/oder der Schaltvorrichtung keine weiteren Mittel nötig sind, um zu verhindern, dass Dämpfflüssigkeit aus der Ausgleichsammer austritt und mit der Membrankammer und/oder der Schaltvorrichtung in Berührung kommt, bzw. in die Umgebung des Aggregatlagers gelangt.

In einer Ausgestaltung umfasst die Baugruppe, insbesondere die Schaltvorrichtung eine Abdeckung, die die Dichtung an der Kanalscheibe, insbesondere an der Aufnahmeöffnung der Kanalscheibe befestigt. Hierdurch kann zum einen die Dichtung an der Kanalscheibe fixiert werden und die Schaltvorrichtung und die Membrankammer gegenüber der Ausgleichskammer abgedichtet werden. Zum anderen kann das Gewicht der Baugruppe variiert werden. Dies hat den Vorteil, dass auf die Schwingungseigenschaften der Baugruppe über das Gewicht der Abdeckung Einfluss genommen werden kann. Damit können die Dämpfungseigenschaften des Aggregatlagers, insbesondere die Übertragungsfunktion der Schwingungen verbessert werden. Ebenso kann über die Wahl des Materials eines Gehäuses der Schaltvorrichtung das Gewicht der Baugruppe variiert und damit auf die Schwingungseigenschaften der Baugruppe Einfluss genommen werden.

Bevorzugt betrifft die Erfindung ferner ein hydraulisch dämpfendes, schaltbares Aggregatlager mit der erfindungsgemäßen Baugruppe.

Erfindungsgemäß ist weiterhin ein Verfahren geschaffen zum Zusammenbau der oder einer Baugruppe für ein hydraulisch dämpfendes, schaltbares Aggregatlager, wobei die Baugruppe die oder eine Schaltvorrichtung zum Öffnen und Verschließen der oder einer Öffnung in der oder einer Membrankammer und die oder eine Kanalscheibe umfasst und die Schaltvorrichtung an der Kanalscheibe, insbesondere in der oder einer Aufnahmeöffnung der Kanalscheibe mittels Formschluss und/oder Kraftschluss und/oder Stoffschluss befestigt wird.

In einer Ausgestaltung wird die Schaltvorrichtung abgedichtet, insbesondere gekapselt, bevor die Schaltvorrichtung an der Kanalscheibe befestigt wird. Dies kann beispielsweise mittels Vergussmasse oder einem Schaltvorrichtungsgehäuse geschehen.

In einer Ausgestaltung wird, bevor die Schaltvorrichtung an der Kanalscheibe befestigt wird, die oder eine Dichtung, insbesondere die oder eine elastische Dichtung, an der Schaltvorrichtung befestigt und/oder die Dichtung an der Kanalscheibe befestigt und/oder die Dichtung zwischen die Kanalscheibe und die Schaltvorrichtung angebracht, sodass die Dichtung die Schaltvorrichtung gegenüber der Membrankammer abdichtet.

In einer Ausgestaltung wird die Dichtung derart an der Schaltvorrichtung und/oder der Kanalscheibe befestigt und/oder zwischen die Kanalscheibe und die Schaltvorrichtung angebracht, dass die Dichtung die oder eine Ausgleichskammer zur Aufnahme des oder eines Dämpfmittels, insbesondere der oder einer Dämpfflüssigkeit begrenzt. Vorzugsweise bildet die Dämpfflüssigkeit das Dämpfmittel.

In einer Ausgestaltung wird die oder eine Abdeckung derart an der Kanalscheibe befestigt, dass die Abdeckung die Dichtung an der Kanalscheibe, insbesondere an der Aufnahmeöffnung der Kanalscheibe befestigt und insbesondere die Abdeckung an der Kanalscheibe befestigt wird nachdem die Schaltvorrichtung an der Kanalscheibe befestigt wurde. Mit anderen Worten ermöglicht die vorliegende Erfindung eine andere Abfolge von Schritten beim Zusammenbau und/oder Einbau des Aggregatlagers. Die Abdeckung kann angebracht bzw. befestigt werden, nachdem die Schaltvorrichtung bereits verbaut, bzw. in die Kanalscheibe integriert wurde. Dies hat beispielsweise den Vorteil, dass die Schaltvorrichtung noch zugänglich ist, nachdem sie bereits verbaut wurde und anschließend die Montage der Abdeckung erfolgt.

In einer Ausgestaltung umfasst die Schaltvorrichtung die oder eine Abdeckung, wobei die Abdeckung derart an der Kanalscheibe befestigt wird, dass die Abdeckung die Dichtung an der Kanalscheibe, insbesondere an der Aufnahmeöffnung der Kanalscheibe befestigt und insbesondere die Schaltvorrichtung an der Kanalscheibe befestigt wird indem die Abdeckung an der Kanalscheibe befestigt wird.

In einer Ausgestaltung wird die Abdeckung derart an der Kanalscheibe befestigt, dass die Dichtung die Membrankammer gegenüber der Ausgleichskammer abdichtet.

Nachfolgend sind anhand der beigefügten Figuren beispielhafte Ausführungsformen der Erfindung näher beschrieben. Es zeigen:
Die Figur 1 den Querschnitt eines Aggregatlagers;
die Figur 2 den Querschnitt einer ersten Baugruppe für ein Aggregatlager;
die Figur 3 den Querschnitt einer zweiten Baugruppe für ein Aggregatlager.

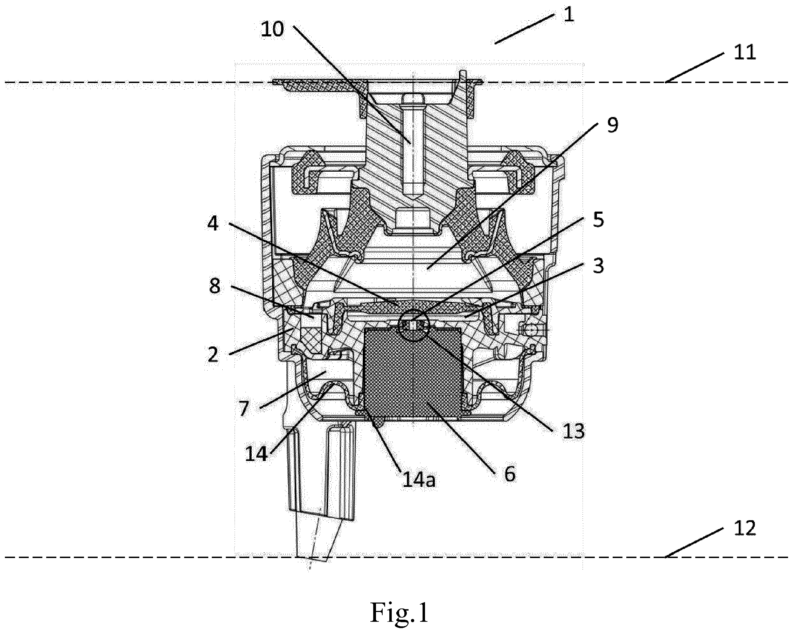

Die Figur 1 zeigt den Querschnitt eines Aggregatlagers 1 mit einer Kanalscheibe 2 und einer Membrankammer 3. Die Kanalscheibe 2 umfasst Kanäle zur Verbindung einer Arbeits- mit einer Ausgleichskammer des Aggregatlagers. Die Membrankammer 3 wird von der Kanalscheibe 2 und einer elastischen Membran 4 begrenzt. Die Membrankammer 3 weist eine Öffnung 5 auf. Unterhalb und/oder auf einer der Membrankammer 3 angewandten Seite der Öffnung 5 ist eine Schaltvorrichtung 6 angebracht. Die Schaltvorrichtung 6 wird von einer ringförmigen Ausgleichskammer 7 umgeben. Die Ausgleichskammer 7 ist mit einem Kanal 8 räumlich verbunden. An der der Membrankammer 3 abgewandten Seite der Membran 4 grenzt eine Arbeitskammer 9, die mit einer Dämpfflüssigkeit gefüllt sein kann und mit dem Kanal 8 räumlich verbunden ist.

Die Funktion des Aggregatlagers 1 besteht vereinfacht gesagt darin, eine parallel und senkrecht zur Rotationsachse 10 des Aggregatlagers 1 wirkende Kraft zu dämpfen. Wirkt eine Kraft an einer ersten, zur Rotationsachse 10 des Aggregatlagers 1 senkrecht stehenden Ebene 11 in Richtung der Rotationsachse 10, so kann diese Kraft gedämpft an eine zweite, zur Rotationsachse 10 senkrecht stehenden Ebene 12 übertragen werden. Die Dämpfung kann über eine Volumenverkleinerung bzw. Volumenvergrößerung der Arbeitskammer 9 geschehen, wodurch die Dämpfflüssigkeit über den Kanal 8 aus der Arbeitskammer 9 in die Ausgleichskammer 7 bzw. aus der Ausgleichskammer 7 in die Arbeitskammer 9 verdrängt wird. Darüber hinaus können die elastischen Komponenten des Aggregatlagers 1, wie die Tragfeder und die Membran 4, die Volumenänderung aufnehmen.

Bei periodischen Krafteinwirkungen (Schwingungen) im Leerlauf eines Fahrzeugs zwischen der ersten Ebene 11 und der zweiten Ebene 12 in Richtung der Rotationsachse 10 des Aggregatlagers 1 kann es vorteilhaft sein, die Schwingung nicht über die Verdrängung der Dämpfflüssigkeit über das Kanalsystem zu dämpfen. Ein Grund hierfür kann in der Trägheit der Dämpfflüssigkeit oder in der Steifigkeit anderer zur Dämpfung verwendeter Aggregatlagerbauteile liegen. Für diesen Fall ist die Schaltvorrichtung 6 vorgesehen, die dazu ausgebildet ist, die Öffnung 5 in der Membrankammer 3 zu öffnen und zu schließen. Das Öffnen und Schließen der Öffnung 5 kann je nach Ausführung der Schaltvorrichtung automatisch oder manuell geschehen. Bei geöffneter Öffnung 5 ist die Membrankammer 3 mit der Umgebung des Aggregatlagers 1 räumlich verbunden.

Dadurch entspricht der Luftdruck in der Membrankammer dem Umgebungsdruck des Aggregatlagers, beispielsweise dem Atmosphärendruck auf der Erdoberfläche. Wirkt nun eine Kraft an der ersten, zur Rotationsachse 10 senkrecht stehenden Ebene 11 in Richtung der Rotationsachse 10, so kann diese Kraft dadurch gedämpft werden, dass sich das Volumen der Membrankammer 3 durch elastische Verformung der Membran 4 verkleinert bzw. vergrößert und sich die in der Arbeitskammer 9 befindende Dämpfflüssigkeit in Richtung der Membrankammer 3 ausbreitet bzw. ausgehend von der Membrankammer 3 verdrängt wird.

Bei geschlossener Öffnung 5 geschieht die Dämpfung nicht gleichermaßen über die Volumenänderung der Membrankammer 3, da die elastische Bewegung der Membran 4 und die damit verbundene Volumenänderung der Membrankammer 3 durch die begrenzte Kompressibilität der Luft in der Membrankammer 3 eingeschränkt ist.

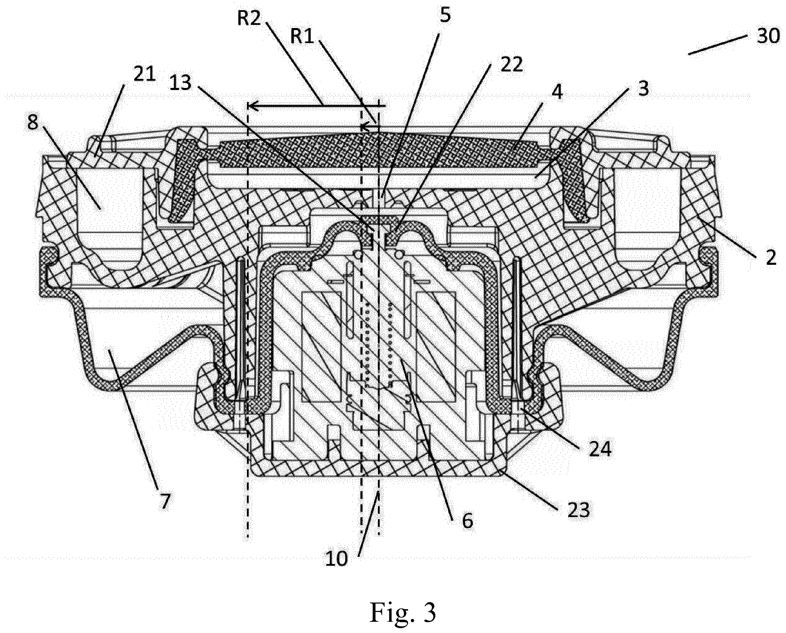

Die dargestellte Schaltvorrichtung 6 umfasst einen Dichtkopf 13. Durch die Bewegung des Dichtkopfes 13 entlang der Rotationsachse 10 kann die Öffnung 5 geöffnet bzw. geschlossen werden. Bei geöffneter Öffnung 5 ist die Membrankammer 3 über einen Kanal (siehe Figur 3) mit der Umgebung des Aggregatlagers räumlich verbunden. Die Schaltvorrichtung 6 ist direkt an der Kanalscheibe 2 angebracht. Alternativ kann die Schaltvorrichtung 6 ein Gehäuse, beispielsweise ein Kunststoffgehäuse umfassen, welches an der Kanalscheibe 2 angebracht ist. Ferner kann die Schaltvorrichtung eine Abdeckung 23 (siehe Figur 3) umfassen, die an der Kanalscheibe 2 angebracht ist. Die Schaltvorrichtung 6 kann in die Kanalscheibe 2 mittels Erhebungen an der Schaltvorrichtung 6 und Senken an der Kanalscheibe 2 mechanisch integriert sein. Die Schaltvorrichtung 6 kann auch anderweitig an der Kanalscheibe 2 angebracht sein. So kann die Schaltvorrichtung beispielsweise mit Vergussmasse an der Kanalscheibe 2 angebracht sein.

Die Schaltvorrichtung 6 wird weiterhin dazu verwendet, eine ringförmige Balgdichtung 14, die die Ausgleichskammer 7 begrenzt, an dem inneren Radius 14a der Balgdichtung 14 zur Abdichtung der Schaltvorrichtung und/oder der Membrankammer gegenüber der Ausgleichskammer an der Kanalscheibe 2 zu fixieren. Ebenso kann das Gehäuse der Schaltvorrichtung 6 die Balgdichtung 14 an der Kanalscheibe fixieren.

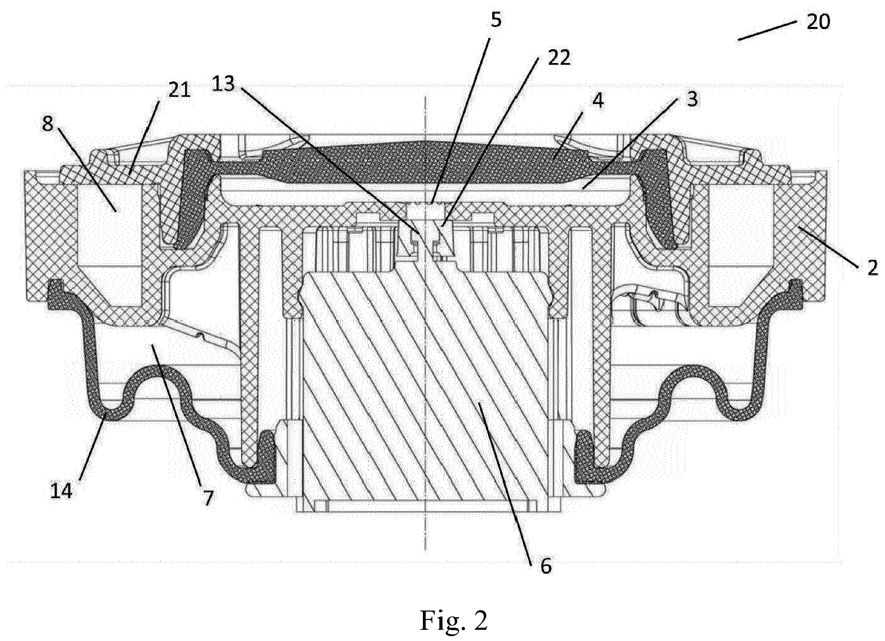

In Figur 2 ist der Querschnitt einer ersten Baugruppe 20 für ein Aggregatlager, beispielsweise das Aggregatlager 1 dargestellt. Vorzugsweise bildet die erste Baugruppe 20 eine Baugruppe des Aggregatlagers 1. Gleiche oder ähnliche, in den Figuren 1 und 2 dargestellte Merkmale, sind mit gleichen Bezugszeichen versehen. Die Baugruppe 20 umfasst neben der Kanalscheibe 2, der Membrankammer 3, der Membran 4, der Balgdichtung 14 und der Schaltvorrichtung 6 eine ringförmige Abdeckscheibe 21, die gemeinsam mit der Kanalscheibe 2 den Kanal 8 begrenzt. Die Abdeckscheibe 21 fixiert außerdem die Membran 4 an der Kanalscheibe 2, sodass die vom Innendurchmesser der Abdeckscheibe 21 begrenzte Öffnung in der Abdeckscheibe 21 von der Membran 4 bedeckt wird. Die derart fixierte Membran 4 begrenzt mit der Kanalscheibe 2 die Membrankammer 3.

Die in Figur 2 dargestellte Baugruppe 20 umfasst eine Dichtung 22. Der Dichtkopf 13 der Schaltvorrichtung 6 ist derart positioniert, dass die Öffnung 5 geschlossen ist. Die Dichtung 22 trennt die Schaltvorrichtung 6 bei der dargestellten Position des Dichtkopfs 13, d.h. bei geschlossener Öffnung 5, von der Membrankammer 3 räumlich.

Die Kanalscheibe 2 umfasst eine Aufnahmeöffnung, in der die Schaltvorrichtung 6 befestigt bzw. integriert wird. Die Ausgleichskammer 7 ist als Verbundring ausgeführt und weist einen inneren und einen äußeren Rand auf, wobei sich die Aufnahmeöffnung innerhalb des inneren Rand der Ausgleichskammer 7, das heißt innerhalt des Verbundrings befindet. Die Ausgleichskammer 7 wird von der Balgdichtung 14 und der Kanalscheibe 2 begrenzt. Insbesondere wird die Ausgleichskammer 7 von der Aufnahmeöffnung der Kanalscheibe 2 begrenzt.

Am äußeren Rand der Ausgleichskammer 7 ist die Balgdichtung 14 an der Kanalscheibe 2 fixiert. Am inneren Rand der Ausgleichskammer 7 ist die Balgdichtung 14 an der Kanalscheibe 2 fixiert. Insbesondere ist die Balgdichtung 14 am Rand der Aufnahmeöffnung fixiert, der die Ausgleichskammer 7 begrenzt.

Die Figur 3 zeigt den Querschnitt einer zweiten Baugruppe 30, die der ersten Baugruppe 20 ähnlich ist. Beispielsweise kann die zweite Baugruppe 30 die erste Baugruppe 20, z.B. bei dem Aggregatlager 1, ersetzen. Gleiche oder ähnliche Merkmale sind mit gleichen Bezugszeichen versehen. Erstreckt sich die Dichtung 22 von der Rotationsachse 10 bis zum ersten Radius R1, so trennt die Dichtung 22 die Schaltvorrichtung 6 bei geschlossener Öffnung 5 räumlich von der Membrankammer 3. Hierbei kann die Dichtung 22, wie dargestellt, den Dichtkopf 13 umschließen, um die dauerhafte Positionierung der Dichtung 22 auf dem Dichtkopf 13 zu gewährleisten. Entspricht der Radius der Dichtung 22 dem zweiten Radius R2, so ist die Dichtung 22 zwischen der Schaltvorrichtung 6 und der Kanalscheibe 2 fixiert und trennt die Schaltvorrichtung 6 sowohl bei geöffneter als auch bei geschlossener Öffnung 5 räumlich von der Membrankammer 3. Hierzu kann die die Schaltvorrichtung 6 beispielsweise wie in Bezug auf Figur 1 beschrieben an der Kanalscheibe 2 angebracht sein und die Dichtung 22 an der Kanalscheibe 2 oder an der Schaltvorrichtung 6 oder zwischen der Kanalscheibe 2 und der Schaltvorrichtung 6 angebracht sein.

In Figur 3 ist die Dichtung 22 derart ausgeführt, dass sich ihr Radius von der Rotationsachse 10 bis zum Umfang der Kanalscheibe 2 erstreckt. Die Dichtung ist dabei an der Umfangsseite der Kanalscheibe 2 fixiert. Derart erfüllt die Dichtung 22 drei Funktionen: Die Dichtung 22 trennt die Schaltvorrichtung 6 räumlich von der Membrankammer 3 bei geschlossener und geöffneter Öffnung 5, begrenzt gemeinsam mit der Kanalscheibe 2 die Ausgleichskammer 7 und dichtet die Ausgleichskammer 7 gegenüber der Schaltvorrichtung 6 und der Membrankammer 3 ab. Die in den Figuren 1 und 2 dargestellte Balgdichtung wird somit von der Dichtung 22 ersetzt, bzw. von dieser umfasst.

Wie dargestellt ist die Dichtung 22 zwischen der Ausgleichskammer 7 und der Membrankammer 3 an der Kanalscheibe 2 angebracht. Die Dichtung 22 wird zwischen der Ausgleichskammer 7 und der Membrankammer 3 zur Abdichtung der beiden Kammern voneinander von einer Abdeckung 23 an der Kanalscheibe 2 fixiert. Die Abdeckung 23 wird mittels einer Erhebung in der Abdeckung 23 und einer Senke am Rand der Aufnahmeöffnung für die Schaltvorrichtung 6 an der Kanalscheibe 2 fixiert, wobei die Dichtung 22 die Abdeckung 23 räumlich von der Kanalscheibe 2 trennt. Die Abdeckung 23 ist am inneren Rand der Ausgleichskammer 7 an der Kanalscheibe 2 fixiert. Mit anderen Worten: Die Abdeckung 23 ist an der Aufnahmeöffnung für die Schaltvorrichtung 6, insbesondere am Rand der Aufnahmeöffnung an der Kanalscheibe 2 fixiert. Die Abdeckung 23 fixiert die Dichtung 22 am inneren Rand der Ausgleichskammer 7 an der Kanalscheibe 2. Die Ausdehnung der Abdeckung 23 senkrecht zur Rotationsachse 10 ist kleiner als die Ausdehnung der Ausgleichskammer 7, ausgehend von der Rotationsachse 10. Mit anderen Worten: Die Abdeckung 23 befindet sich innerhalb des äußeren Randes der als Verbundring ausgestalteten Ausgleichskammer 7.

Die Abdeckung 23 ist außerdem an der Schaltvorrichtung 6 angebracht oder wird von der Schaltvorrichtung 6 umfasst und fixiert die Schaltvorrichtung 6 zusätzlich an der Kanalscheibe 2. Die Schaltvorrichtung 6 kann analog zur in Figur 2 dargestellten Ausführung der Schaltvorrichtung 6 über Erhebungen und Senken in die Kanalscheibe 2 integriert sein, wobei die Dichtung 22 die Schaltvorrichtung 6 von der Kanalscheibe 2 räumlich trennt.

Die Dichtung 22 und die Abdeckung 23 umfassen jeweils eine Aussparung zur Bildung eines Luftkanals 24, über den eine räumliche Verbindung zwischen der Membrankammer 3 und der Umgebung der Baugruppe 30 hergestellt ist. Hierdurch kann Luft (als Pfeile dargestellt) aus der Membrankammer 3 in die Umgebung der Baugruppe 30 gelangen, und umgekehrt.

### Bezugszeichenliste

- 1: Aggregatlager
- 2: Kanalscheibe
- 3: Membrankammer
- 4: Membran
- 5: Öffnung
- 6: Schaltvorrichtung
- 7: Ausgleichskammer
- 8: Kanal
- 9: Arbeitskammer
- 10: Rotationsachse
- 11: Erste Ebene
- 12: Zweite Ebene
- 13: Dichtkopf
- 14: Balgdichtung
- 20: Erste Baugruppe
- 21: Abdeckscheibe
- 22: Dichtung
- 23: Abdeckung
- 24: Luftkanal
- 30: Zweite Baugruppe
- R1: Erster Radius
- R2: Zweiter Radius

## Patentansprüche

1. Baugruppe (20) für ein hydraulisch dämpfendes, schaltbares Aggregatlager (1), die Baugruppe (20) umfassend eine Schaltvorrichtung (6) zum Öffnen und Verschließen einer Öffnung in einer Membrankammer (3) und eine Kanalscheibe (2), **dadurch gekennzeichnet, dass** die Schaltvorrichtung (6) an der Kanalscheibe (2), insbesondere in einer Aufnahmeöffnung der Kanalscheibe (2) mittels Formschluss und/oder Kraftschluss und/oder Stoffschluss befestigt ist.

2. Baugruppe (20) nach Anspruch 1, **dadurch gekennzeichnet, dass** die Baugruppe (20) eine Dichtung (22), insbesondere eine elastische Dichtung (22) zum Abdichten der Schaltvorrichtung (6) gegenüber der Membrankammer (3) umfasst.

3. Baugruppe (20) nach Anspruch 2, **dadurch gekennzeichnet, dass** die Baugruppe (20) eine Ausgleichskammer (7) zur Aufnahme eines Dämpfmittels, insbesondere einer Dämpfflüssigkeit umfasst, wobei die Dichtung (22) die Ausgleichskammer (7) begrenzt.

4. Baugruppe (20) nach Anspruch 3, **dadurch gekennzeichnet, dass** die Dichtung (22) die Ausgleichskammer (7) gegenüber der Membrankammer (3) und/oder der Schaltvorrichtung (6) abdichtet.

5. Baugruppe (20) nach Anspruch 3 oder 4, **dadurch gekennzeichnet, dass** die Baugruppe (20), insbesondere die Schaltvorrichtung (6) eine Abdeckung (23) umfasst, die die Dichtung (22) an der Kanalscheibe (2), insbesondere an der Aufnahmeöffnung der Kanalscheibe (2) befestigt.

6. Verfahren zum Zusammenbau einer Baugruppe (20) für ein hydraulisch dämpfendes, schaltbares Aggregatlager (1), die Baugruppe umfassend eine Schaltvorrichtung (6) zum Öffnen und Verschließen einer Öffnung (5) in einer Membrankammer (3) und eine Kanalscheibe (2), wobei die Schaltvorrichtung (6) an der Kanalscheibe (2), insbesondere in einer Aufnahmeöffnung der Kanalscheibe (2) mittels Formschluss und/oder Kraftschluss und/oder Stoffschluss befestigt wird.

7. Verfahren nach Anspruch 6, wobei die Schaltvorrichtung (6) abgedichtet, insbesondere gekapselt wird bevor die Schaltvorrichtung (6) an der Kanalscheibe (2) befestigt wird.

8. Verfahren nach Anspruch 6 oder 7, wobei, bevor die Schaltvorrichtung (6) an der Kanalscheibe (2) befestigt wird, eine Dichtung (22), insbesondere eine elastische Dichtung (22), an der Schaltvorrichtung (6) befestigt wird und/oder die Dichtung (22) an der Kanalscheibe (2) befestigt wird und/oder die Dichtung (22) zwischen die Kanalscheibe (2) und die Schaltvorrichtung (6) angebracht wird, sodass die Dichtung (22) die Schaltvorrichtung (6) gegenüber der Membrankammer (3) abdichtet.

9. Verfahren nach Anspruch 8, wobei die Dichtung (22) derart an der Schaltvorrichtung (6) und/oder der Kanalscheibe (2) befestigt wird und/oder zwischen die Kanalscheibe (2) und die Schaltvorrichtung (6) angebracht wird, dass die Dichtung (22) eine Ausgleichskammer (7) zur Aufnahme eines Dämpfmittels, insbesondere einer Dämpfflüssigkeit begrenzt.

10. Verfahren nach Anspruch 8 oder 9, wobei eine Abdeckung (23) derart an der Kanalscheibe (2) befestigt wird, dass die Abdeckung (23) die Dichtung (22) an der Kanalscheibe (2) befestigt und insbesondere die Abdeckung (23) an der Kanalscheibe (2) befestigt wird nachdem die Schaltvorrichtung (6) an der Kanalscheibe (2) befestigt wurde.

11. Verfahren nach Anspruch 8 oder 9, wobei die Schaltvorrichtung (6) eine Abdeckung (23) umfasst und die Abdeckung (23) derart an der Kanalscheibe (2) befestigt wird, dass die Abdeckung (23) die Dichtung (22) an der Kanalscheibe (2) befestigt und insbesondere die Schaltvorrichtung (6) an der Kanalscheibe (2) befestigt wird indem die Abdeckung (23) an der Kanalscheibe (2) befestigt wird.

12. Verfahren nach Anspruch 10 oder 11, wobei die Abdeckung (23) derart an der Kanalscheibe (2) befestigt wird, dass die Dichtung (22) die Membrankammer (3) gegenüber der Ausgleichskammer (7) abdichtet.
